# EUROPÄISCHE PATENTSCHRIFT

(11) **EP 0 870 118 B1**
(45) Veröffentlichungstag und Bekanntmachung des Hinweises auf die Patenterteilung: **30.06.1999**
(21) Anmeldenummer: 96900239.3
(22) Anmeldetag: 18.01.1996
(51) Int. Cl.: F16B 5/02, F16B 25/00

(54) **DISTANZSCHRAUBE**
DISTANCE SCREW
VIS D'ECARTEMENT

(43) Veröffentlichungstag der Anmeldung: 14.10.1998
(73) Patentinhaber: Flückiger, Werner, 5727 Oberkulm (CH)
(72) Erfinder: Flückiger, Werner, 5727 Oberkulm (CH)
(74) Vertreter: Heubeck, Bernhard
(86) Internationale Anmeldenummer: CH9600025
(87) Internationale Veröffentlichungsnummer: WO9726460

(56) Entgegenhaltungen:
- EP-A- 0 319 812
- DE-A- 3 435 434
- DE-A- 4 228 727
- US-A- 4 808 051

## Beschreibung

Die Erfindung betrifft eine Distanzschraube gemäss dem Oberbegriff des Anspruches 1.

Eine Distanzschraube dieser Art ist aus der US-A-4 808 051 bzw. der DE-A-3 435 434 bekannt. Die Schraube ist eine Senkkopfschraube mit gleichbleibenden Kerndurchmesser. Die Schraube hat am vorderen Ende einen Gewindeabschnitt einen Verankerungsabschnitt und einen dazwischen angeordneten Schaftabschnitt. Der Verankerungsabschnitt besteht aus einer Mehrzahl von sich in Richtung zum Schraubenkopf hin erweiternden, ringförmigen Ansätzen. Diese Schraube wird dazu verwendet, ein Bauelement an einem Grundelement zu befestigen.

Als Nachteil erweist sich, dass diese Schraube nur begrenzt einsetzbar ist. Beim Einschrauben des Gewindeabschnittes in das Grundelement muss die aufzubringende Kraft so gross sein, dass der Verankerungsabschnitt in das Bauelement eingetrieben wird. Daraus folgt, dass das Bauelement immer eine geringere Festigkeit als das Grundelement haben muss.

Bei einer anderen bekannten Ausführungsform hat die Distanzschraube einen ersten Gewindeabschnitt am vorderen Ende, einen zweiten, dickeren Gewindeabschnitt am hinteren Ende und einen die Gewindeabschnitte verbindenden Schaftabschnitt.

Diese Schraube hat die Nachteile, dass der gewünschte Abstand zwischen dem Grundelement und dem Bauelement durch Unterlagen vorher festgelegt werden muss, weil die Korrektur des Abstandes nicht möglich ist, da aufgrund der gleichen Gewindesteigung der Gewindeabschnitte beim Zurückdrehen die Schraube aus dem Bauelement herausgedreht wird und dass aufgrund des fehlenden Schraubenkopfes das Bauelement vom dickeren Gewindeabschnitt abgezogen werden kann, insbesondere bei weichen Holzarten.

Weiter ist aus der EP-A-0 319 812 eine Schraube mit einem Schraubenkopf und zwei durch einen Schaftabschnitt verbundenen Gewinde abschnitten bekannt, bei der beide Gewindeabschnitte die gleiche Steigung und den gleichen Aussendurch messer aufweisen. Nachteilig ist, dass weitere Mittel zur Festlegung des Zwischenabstandes erforderlich sind.

Der Erfindung liegt die Aufgabe zugrunde, eine Distanzschraube zu schaffen, welche den vorstehend genannten Einschränkungen nicht unterliegt.

Die mit der Erfindung erzielbaren Vorteile sind in der einfachen Anwendbarkeit und im vorteilhaften Preis zu sehen.

Vorteilhafte Ausführungsformen ergeben sich aus den abhängigen Patentansprüchen.

Nachfolgend wird die Erfindung anhand der beiliegenden Zeichnungen erläutert.

Es zeigen:
- Fig. 1: eine Ansicht einer Ausführungsform einer erfindungsgemässen Schraube;
- Fig. 2: einen Schnitt entlang der Linie II-II in Fig. 1 und
- Fig.3: eine Ansicht eines Teils einer anderen Ausführungsform der erfindungsgemässen Schraube.

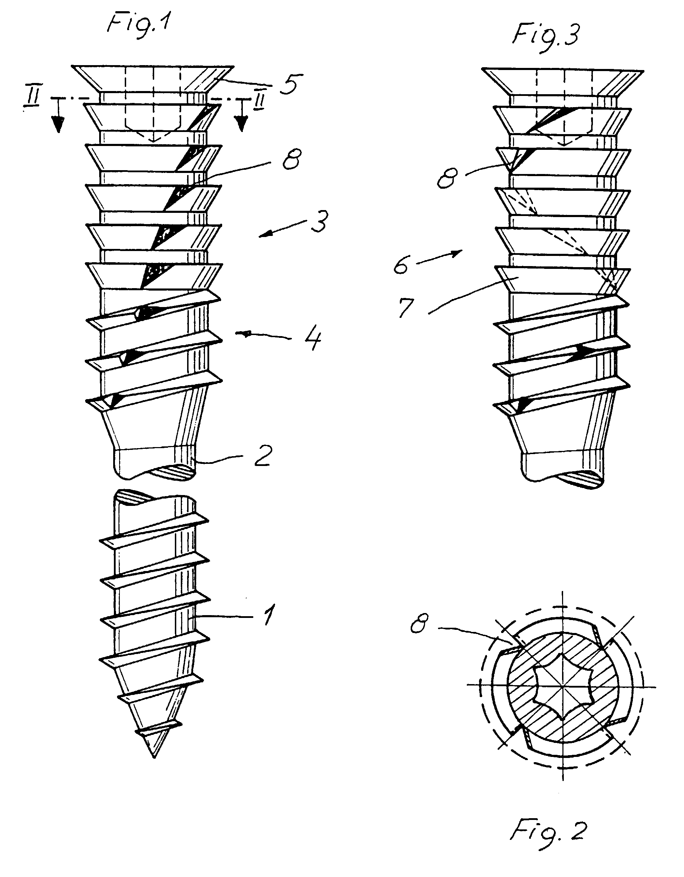

Es wird auf die Fig. 1 und 2 Bezug genommen. Die Distanzschraube enthält einen ersten Gewindeabschnitt 1 am vorderen Ende, einen Schaftabschnitt 2, der an den ersten Gewindeabschnitt angrenzt, einen Kopfabschnitt 3 am hinteren Ende, einen zweiten Gewindeabschnitt 4, der zwischen dem Kopfabschnitt und dem Schaftabschnitt ausgebildet ist und eine Ausnehmung zum Einstecken eines Werkzeuges. Das Gewinde des ersten und zweiten Gewindeabschnittes 1 und 4 weist die gleiche Steigung auf.

Der Kopfabschnitt 3 weist einen kopfähnlichen Abschnitt, der als ringförmiger Vorsprung 5 ausgebildet ist und einen Verankerungsabschnitt 6 mit fünf ringförmige Vorsprünge 7 auf, wobei die Vorsprünge 5, 7 koaxial und im Abstand zueinander ausgebildet sind. Der Vorsprung 5 ist bündig mit dem Schraubenende ausgebildet und hat einen Aussendurchmesser, der grösser ist als der Aussendurchmesser der nachgeordneten fünf Vorsprünge 7, um einen sauberen Abschluss der Einschraubstelle zu erzielen. Jeder Vorsprung hat einen konischen Querschnitt, der sich ausgehend vom Kerndurchmesser zum hinteren Ende der Schraube erweitert. Diese Ausbildung hat den Vorteil, dass dadurch eine schraubenkopfähnliche Wirkung erreicht wird, welche das Abziehen des Bauelementes von der Schraube verhindert. Der Verankerungsabschnitt 6 und der zweite Gewindeabschnitt 4 haben den gleichen Kerndurchmesser, der grösser ist als der Kerndurchmesser des ersten Gewindeabschnittes 1.

Der zweite Gewindeabschnitt 4 hat drei Gewindegänge mit dem gleichen Aussendurchmesser, wie die Vorsprünge 7 und ist auf dem Verankerungsabschnitt 6 so ausgebildet, dass der letzte Gewindegang am angrenzenden Vorsprung 7 übergangslos endet. Der Verankerungsabschnitt hat eine Länge die etwa doppelt so lang wie der zweite Gewindeabschnitt ist. In diesem Zusammenhang wird darauf hingewiesen, dass andere Längenverhältnisse gewählt werden können.

Bei der Anwendung der Schraube wird der erfindungsgemässe zweite Gewindeabschnitt 4 in das Bauelement eingeschraubt und dadurch der kopfähnliche Abschnitt und der Verankerungsabschnitt 6 in das Bauelement eingezogen. Dieser Vorgang erfolgt unabhängig vom Eindrehen des ersten Gewindeabschnittes 1 in das Grundelement. Durch diese Unterteilung der Einschraubvorgänge ergeben sich insbesondere folgende Vorteile, dass zur Befestigung des Bauelementes keine Unterlagen benötigt werden, um den Verankerungsabschnitt in das Bauelement einzuziehen, vielmehr kann das Bauelement von Hand auf Abstand gehalten werden und dass die Schraube unabhängig von den Festigkeitsunterschieden des Grundelementes und des Bauelementes angewendet werden kann.

In den Vorsprüngen 7 des Verankerungsabschnittes 6 und in den Gewindegängen des zweiten Gewindeabschnittes 4 sind Kerben 8 ausgebildet, die auf einer geraden Linie liegen. Diese Linie verläuft unter einem Winkel von etwa 15° bezüglich der Schraubenachse. Wie die Fig. 2 zeigt sind vier Reihen von Kerben 8 vorgesehen, die gleichmässig verteilt und mit gleicher Ausrichtung am Umfang angeordnet sind. Die Kerben 8 sind dreieckförmig ausgebildet, wobei die Spitze auf dem Kerndurchmesser liegt und wobei eine Seitenfläche radial und die andere Seitenfläche etwa tangential verläuft. Die Kerben 8 können auch entlang einer schraubenförmigen Linie angeordnet werden (Fig. 3).

Diese Kerben 8 bilden Schneidkanten, die in besonders vorteilhafter Weise einerseits das Eindrehen des zweiten Gewindeabschnittes 4 in das Bauelement erleichtern und andererseits bei einer Abstandskorrektur eine horizontale Drehung des Verankerungsabschnittes zur Schraubenachse bewirken, so dass der Verankerungsabschnitt bei der Abstandskorrektur nicht aus dem Bauelement heraustreten kann.

Es wird darauf hingewiesen, dass die Schneidkanten der Kerben 8 in den Vorsprüngen 7 bezüglich den Schneidkanten in den Gewindegängen des zweiten Gewindeabschnittes 4 entgegengesetzt gerichtet ausgebildet werden können.

Abschliessend wird darauf hingewiesen, dass der erste und zweite Gewindeabschnitt 1 und 4 Gewinde der gleichen oder unterschiedlicher Art aufweisen können, z.B. Holzgewinde oder Spanplattengewinde.

## Patentansprüche

1. Distanzschraube aufweisend einen in ein Grundelement einschraubbaren ersten Gewindeabschnitt (1), einen in ein Bauelement einbringbaren Kopfabschnitt (3) mit einem schraubenkopfähnlichen Abschnitt (5) und einem Verankerungsabschnitt (6), der koaxial angeordnete, ringförmige Vorsprünge aufweist, einen zwischen dem Kopfabschnitt und dem ersten Gewindeabschnitt ausgebildeten Schaftabschnitt (2) und eine Ausnehmung zum Einstecken eines Werkzeuges an der Stirnseite, gekennzeichnet durch einen zweiten Gewindeabschnitt (4), der zwischen dem Verankerungsabschnitt und dem Schaftabschnitt ausgebildet ist, wobei der Verankerungsabschnitt (6) und der zweite Gewindeabschnitt (4) einen grösseren Kerndurchmesser als der erste Gewindeabschnitt (1) aufweisen.

2. Distanzschraube nach Anspruch 1, dadurch gekennzeichnet, dass der Verankerungsabschnitt (6) und der zweite Gewindeabschnitt (4) im wesentlichen den gleichen Aussendurchmesser haben.

3. Distanzschraube nach einem der Ansprüche 1 oder 2, dadurch gekennzeichnet, dass der Verankerungsabschnitt (6) und der zweite Gewindeabschnitt (4) den gleichen Kerndurchmesser haben.

4. Distanzschraube nach einem der Ansprüche 1 bis 3, gekennzeichnet durch eine erste Schneidhilfe (8), die am Verankerungsabschnitt (6) ausgebildet ist.

5. Distanzschraube nach einem der Ansprüche 1 bis 4, gekennzeichnet durch eine zweite Schneidhilfe (8), die am zweiten Gewindeabschnitt (4) ausgebildet ist.

6. Distanzschraube nach Anspruch 5, sofern er auf Anspruch 4 rückbezogen ist, dadurch gekennzeichnet, dass die erste und zweite Schneidhilfe als Kerben (8) ausgebildet sind.

7. Distanzschraube nach Anspruch 6, dadurch gekennzeichnet, dass die Kerben (8) die gleiche Grundform haben.

8. Distanzschraube nach Anspruch 6 oder 7, dadurch gekennzeichnet, dass die Kerben (8) entlang einer Linie ausgebildet sind.

9. Distanzschraube nach Anspruch 8, dadurch gekennzeichnet, dass die Linie gerade oder schraubenlinienförmig ist.

## Claims

1. Spacer screw having a first thread section (1) which can be screwed into a base element, a head section (3) which can be introduced into a component and having a section (5) resembling a screw head and an anchoring section (6) having coaxially arranged ring-like projections, a shank section (2) formed between the head section, and the first thread section and a recess for the insertion of a tool at the end face, characterized by a second thread section (4) formed between the anchoring section and the shank section, wherein the anchoring section (6) and the second thread section (4) have a larger core diameter than the first thread section (1).

2. Spacer screw in accordance with claim 1, characterized in that in that the anchoring section (6) and the second thread section (4) have substantially the same outer diameter.

3. Spacer screw in accordance with one of the claims 1 or 2, characterized in that the anchoring section (6) and the second thread section (4) have the same core diameter.

4. Spacer screw in accordance with one of the claims 1 to 3, characterized by a first cutting aid (8) which is formed at the anchoring section (6).

5. Spacer screw in accordance with one of the claims 1 to 4, characterized by a second cutting aid (8) which is formed at the second thread section (4).

6. Spacer screw in accordance with claim 5 insofar as it is dependent on claim 4, characterized in that the first and second cutting aid are formed as notches (8).

7. Spacer screw in accordance with claim 6, characterized in that the notches (8) have the same basic shape.

8. Spacer screw in accordance with claim 6 or claim 7, characterized in that the notches (8) are formed along a line.

9. Spacer screw in accordance with claim 8, characterized in that the line is straight or helical.

## Revendications

1. Vis d'écartement, présentant un premier tronçon fileté (1) pouvant être vissé dans un élément de base, un tronçon de tête (3) pouvant être inséré dans un élément de construction, avec un tronçon (5) ressemblant à une tête de vis et un tronçon d'ancrage (6) qui présente des saillies annulaires disposées coaxialement, un tronçon de tige (2) réalisé entre le tronçon de tête et le premier tronçon fileté et un évidemment pour la mise en place d'un outil au côté frontal, caractérisée par un deuxième tronçon fileté (4) qui est réalisé entre le tronçon d'ancrage et le tronçon de tige, où le tronçon d'ancrage (6) et le deuxième tronçon fileté (4) ont un plus grand diamètre de noyau que le premier tronçon fileté (1).

2. Vis d'écartement selon la revendication 1, caractérisée en ce que le tronçon d'ancrage (6) et le deuxième tronçon fileté (4) ont sensiblement le même diamètre extérieur.

3. Vis d'écartement selon l'une des revendications 1 ou 2, caractérisée en ce que le tronçon d'ancrage (6) et le deuxième tronçon fileté (4) ont le même diamètre de noyau.

4. Vis d'écartement selon l'une des revendications 1 à 3, caractérisée par une première aide de coupe (8) qui est réalisée au tronçon d'ancrage (6).

5. Vis d'écartement selon l'une des revendications 1 à 4, caractérisée par une deuxième aide de coupe (8) qui est réalisée au deuxième tronçon fileté (4).

6. Vis d'écartement selon la revendication 5, dans la mesure où elle dépend de la revendication 4, caractérisée en ce que la première et la deuxième aide de coupe sont réalisées comme encoches (8).

7. Vis d'écartement selon la revendication 6, caractérisée en ce que les encoches (8) ont la même forme de base.

8. Vis d'écartement selon la revendication 6 ou 7, caractérisée en ce que les encoches (8) sont réalisées le long d'une ligne.

9. Vis d'écartement selon la revendication 8, caractérisée en ce que la ligne est droite ou hélicoïdale.
